# EUROPEAN PATENT SPECIFICATION

(11) **EP 2 796 375 B1**
(45) Date of publication and mention of the grant of the patent: **22.05.2019**
(21) Application number: 12866997.5
(22) Date of filing: 12.11.2012
(51) Int. Cl.: B65B 1/30, G01G 19/42, B65B 57/20, B65B 65/08, B65B 1/32, G01G 19/387, G01G 19/393

(54) **QUANTITATIVE PACKING SCALE FOR SPLIT LOADING OF PARTICLES AND QUANTITATIVE WEIGHING METHOD THEREFOR**
QUANTITATIVE PACKWAAGE FÜR GETEILTE PARTIKELLADUNGEN UND QUANTITATIVES ABWIEGEVERFAHREN DAFÜR
SYSTÈME DE PESÉE QUANTITATIVE POUR LE CHARGEMENT SÉPARÉ DE PARTICULES ET PROCÉDÉ DE PESÉE QUANTITATIVE ASSOCIÉ

(30) Priority: 20.06.2012 CN 201210204443
(43) Date of publication of application: 29.10.2014
(73) Proprietor: Shanghai Yamato Scale Co., Ltd, Shanghai 201201 (CN)
(72) Inventor: LIAO, Youjun, Shanghai 201201 (CN); GE, Aoxing, Shanghai 201201 (CN); CUI, Yingxin, Shanghai 201201 (CN); ZONG, Bin, Shanghai 201201 (CN)
(74) Representative: Keil & Schaafhausen Patent- und Rechtsanwälte PartGmbB
(86) International application number: PCT/CN2012/001519
(87) International publication number: WO 2013/189000

(56) References cited:
- EP-A1- 1 970 682
- CN-A- 101 922 961
- CN-A- 102 390 578
- CN-A- 102 700 739
- CN-U- 201 882 251
- DE-A1- 3 802 259
- DE-U1- 29 709 234
- JP-A- 2008 050 026
- US-A1- 2010 208 936
- US-B1- 6 186 194

## Description

### Technical Area:

The present application is related to a weigh packer and a weighing method, especially an electronic weigh packer and a weighing method according to the particle number.

### Technical Background:

A particle counting device is the most direct solution for packaging according to the particle numbers. However, since the particle counting device is slow and pricy, the goods are packaged using an electronic weigh packer according to the unit weight of the particles which is then converted to target weight. In comparison with direct counting method, the weighing method using the weight of the particles is fast and cost efficient. Nevertheless, when the weight of each particle is different, even though the weight of each package using the electronic weigh packer is the same (that is to say, the standard is the same), the number of the particles still varies significantly. DE 38 02 259 discloses such a electronic weigh packer including a unit-particle-weigh-obtaining unit and a quantifying packaging unit.

### Content of the Invention:

The object of the current invention is to provide an electronic weigh packer and a weighing method according to the particle number, which can overcome the above mentioned technical problems. The scale according to the current invention can obtain the unit particle weight in time, amend the weight being packaged and thus improve the packaging accuracy.

The current invention achieves the above mentioned goal as follows:
An electronic weigh packer for weighing according to the number of the goods particles, characterized in that the scale includes a storage funnel, unit particle weight obtaining unit and a quantifying packaging unit, wherein
- the unit particle weight obtaining unit comprises a sampling device, a conveying device, a multiple line vibrator, a storage chute, a camera, a camera controller, a light source and an input device, wherein the quantifying packaging unit is a one-head electronic weigh packer or a multiple-head electronic weigh packer, and comprises a dividing chute, a feeding device, weighing hoppers and a weighing controller, wherein the unit particle weight obtaining unit and all the components of the quantifying packaging unit are coordinated by PLC;
- the unit particle weight obtaining unit also contains a counting & weighing hopper , wherein the function of the counting & weighing hopper is to weigh the particles lined and numbered by the multiple line vibrator, and the counting & weighing hopper can be separately set up or share with one of the weighing hoppers;
- the sampling device is situated inside the storage funnel, whose function is to sample the particles of goods to be wrapped and to feed the sampled particles into the conveying device;
- the function of the conveying device is to evenly convey the particles into to the multiple line vibrator;
- the function of the multiple line vibrator is to accelerate the particles inside its grooves and to line up all the particles inside the grooves in order to prevent overlapping of the particles, and the particles line up and descend into the storage chute with a bottom door;
- the camera coordinates with the light source to scan the descending particles with high velocity and transfers the images to the camera controller;
- the camera controller analyzes the images and count the particle number;
- the function of the storage chute is: when the number of the particles reaches a set number, the bottom door of the storage chute will open and the particles with the certain number will be weighed in the counting & weighing hopper, and the sample of particles, the number of which have been counted, will be discharged into the counting & weighing hopper, where they are weighed,;
- the function of the PLC is to calculate the unit particle weight according to the particle number counted and the total weight of the collective particles, and to calculate the package weight according to the number of particles specified for each package and to amend the weight value to be assigned by the electronic weigh packer;
- the function of the weighing controller is to weigh according to the weight value determined by the PLC;
- the dividing chute is situated below the storage funnel, and the particles are fed into the weighing hopper underneath from all of its outlet openings of the dividing chute through all the feeding devices.

A method for using the electronic weigh packer for weighing according to the number of the goods particles, characterized in that the method comprises the following steps:
- First, setting packing specification of electronic weigh packer through the input device, and setting the number of particles counted each time by the unit-particle-weight-obtaining unit; said package specification is the target number of particles for packaging;
- After setting completed, starting unit-particle-weight-obtaining unit to initiate counting of the number of the particles;
- stopping counting particle number when the number counted by the unit-particle-weight-obtaining unit has reached the number of particles set above; obtaining the goods weight using the counting & weighing hopper; calculating the unit particle weight using PLC and calculating the package weight according to the stipulated package specification and input into weighing controller of electronic weigh packer;
- Electronic weigh packer starts weighing ;
- amending the package weight using the unit particle weight continuously given by the unit-particle-weight-obtaining unit during the operation of the electronic weigh packer.

In a preferred embodiment of the invention, it is described a method for using the electronic weigh packer for weighing characterized in that the package weight is adjusted every tens of seconds as long as particle number counted each time can fully represent the goods particles being packaged.

In a preferred embodiment of the invention, it is described a method for using the electronic weigh packer for weighing, characterized in that when setting the package specification and the number of particles counted each time by the unit-particle-weight-obtaining unit, the operating methods under different conditions are as follows:
- when the particle number set by the unit particle weight obtaining unit each time equals the packaging specification, the particles counted each time, upon being weighed by the counting & weighing hopper to obtain the unit particle weight, are discharged into the packaging container;
- when the particle number set by the unit particle weight obtaining unit each time is smaller than the packaging specification, the particles counted each time, upon being weighed by the counting & weighing hopper to obtain the unit particle weight, are complemented with the lacking number of particles through the feeding device and are then discharged into the packaging container;
- when the particle number set by the unit particle weight obtaining unit each time is larger than the packaging specification, the unit-particle-weight-obtaining unit counts the number of particles in several times, each time counting the target number of particles for packaging, then adding the several counting results and calculating the unit particle weight; each time when the number of the particles reaches the target number, the particles are fed into the weighing hopper where they are weighed and memorized, and then discharged into the packaging container; when the particle number counted the last time is less than the target particle number, the lacked number of particles will be added by the feeding device(s).

In a preferred embodiment of the invention, it is described a method for using the electronic weigh packer for weighing, characterized in that the unit particle weight is calculated by using the following method: the particles of the small sample is calculated each time, and the unit particle weight is calculated by using moving average or weighted moving weighted average.

In a preferred embodiment of the invention, it is described a method for using the electronic weigh packer for weighing, characterized in that the unit particle weight calculating method is: Using the counting result of a single big sample to calculate the unit particle weight.

In a preferred embodiment of the invention, it is described a method for using the electronic weigh packer for weighing, characterized in that the unit particle weight is calculated by using the following method: the particles of the big sample are counted each time, and the unit particle weight is calculated by moving average or moving weighted average.

The advantage of the device and the method of the current invention is: it can timely obtain the unit weight of the goods, amend the packaging weight and improve the accuracy of the packaging according to the particle numbers.

### Figures:

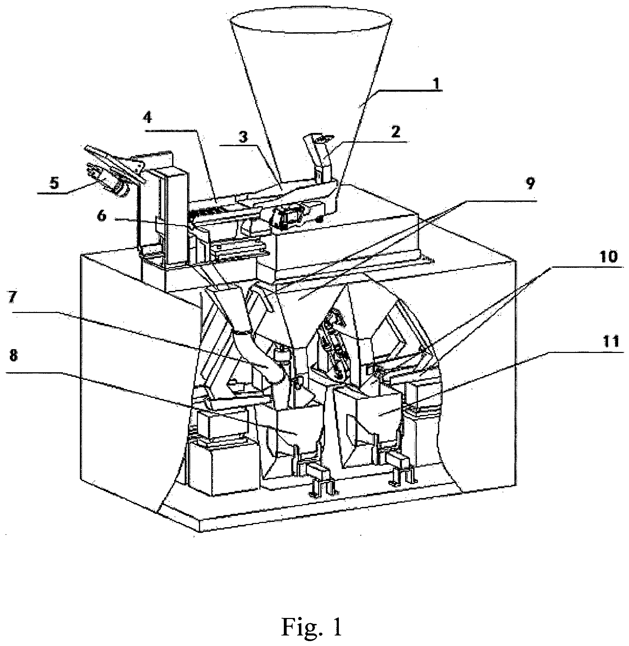

Fig. 1 shows the structure of a relatively optimum example of the present invention.

### Examples:

According to Fig.1, the current invention discloses an electronic weigh packer for weighing according to the number of the goods, comprising a storage funnel 1, unit-particle-weight-obtaining unit and a quantifying packaging unit, wherein the unit particle weight obtaining unit comprises a sampling device 2, a conveying device 3, multiple line vibrator 4, a storage chute 7, a camera 5, a camera controller, a light source 6 and an input device, wherein the quantifying packaging unit is a one-head electronic weigh packer or a multiple-head electronic weigh packer, and comprises a dividing channel 9, a feeding device 10, weighing hoppers 8, 11 and a weighing controller, wherein the unit particle weight obtaining unit and all the components of the quantifying packaging unit are coordinated by PLC.

The unit-particle-weight-obtaining unit also contains a counting & weighing hopper, wherein the function of the counting & weighing hopper is to weigh the goods particles lined and numbered by the multiple line vibrator, and the counting & weighing hopper shares with weighing hopper 8.

The sampling device 2 is situated inside the storage funnel 1, whose function is to sample the goods to be wrapped and to feed the sampled goods into the conveying device 3.

The function of the conveying device 3 is to evenly feed the goods particles into to the multiple line vibrator 4.

The function of the multiple line vibrator 4 is to accelerate the goods inside its channel and to line up all the particles inside the channel in order to prevent overlapping of the particles, and the particles descend into the storage chute 7 with a door.

The camera 5 coordinates with the light source 6 to scan the descending particles with high velocity and transfers the images to the camera controller.

The camera controller analyzes the images and counts the particle number.

The function of the storage chute 7 is: when the number of the particles reaches a certain number, the bottom door of the storage chute will open and the particles with the certain number will be weighed in the counting & weighing hopper.

The function of the PLC is to calculate the unit particle weight according to the particle number and the total weight of the collective particles, and to calculate the package weight according to the stipulated number of particles for each package and to amend the weight value assigned by the electronic weigh packer.

The function of the weighing controller is to assign the weight value according to the weight value set by the PLC.

The dividing chute 9 is situated below the storage funnel 1, and the goods are fed into the weighing hopper 8, 11 from all of its outlet openings through all the feeding devices 10.

The current invention utilizes high quality cameras in order to obtain high definition visible wave profile. The camera applied in the current invention can be German BASLER cameras or any industrial cameras with equal functions.

The PLC of the current invention can be Mitsubishi Q series or FX series.

The weighing controller of the current invention can be Japanese Yamato EDI-801 or FEC-710.
The camera controller can be the IN-SIGHT MICRO series from COGNEX, America.

As a preferred embodiment, the sampling device 2 is located above the sampling spot of the dividing chute 9. As a result, the unit particle weight corresponds completely with the goods actually packed. Since the weight and the size of each particle are different, in order to prevent funneling effect, the sampling takes place on one line instead of one spot, so that the samples are representative.

A method for using the electronic weigh packer for weighing according to the number of the goods as described above, characterized in that the method comprises the following steps:
- First, setting packing specification of electronic weigh packer, which is the target particle number and particle counting number of unit-weight-obtaining unit through the input device;
- After setting completed, start unit-weight-obtaining unit and counting begins;
- stopping counting particle number when the number counted has reached the assigned number; obtaining the goods weight using the counting & weighing hopper; calculating the unit particle weight using PLC and calculating the package weight according to the stipulated package specification and input into weighing controller of electronic weigh packer;

- Electronic weigh packer starts weighing ;
- amending the package weight using the unit particle weight given by the unit particle weight obtaining unit continuously.

Only when the unit particle weight is obtained in a fast manner, the weight change of unit material to be packed can be detected in a timely manner. The method of the current invention counts the particle number using multiple channels, the particle number counted within a certain period of time is higher, and therefore the unit particle weight is more accurate. According to the present invention, the package weight is adjusted every tens of seconds while the particle number counted every time can fully represent the goods being wrapped.

According to the method of the current invention, when the packaging specification of the scale is being set and the unit particle number is being set via the unit particle weight, the different operating methods are as follows:
- when the particle number set by the unit particle weight obtaining unit each time equals the packaging specification, the particles of the set number are weighed by the weighing hopper, after the unit particle weight is obtained, the goods are discharged into the packaging container;
- when the particle number set by the unit particle weight obtaining unit each time is smaller than the packaging specification, the particles of the set number are weighed by the weighing hopper, after the unit particle weight is obtained, the particles lacked are added by the feeding device of the scale, and the goods are then discharged into the packaging container;
- when the particle number set by the unit particle weight obtaining unit each time is bigger than the packaging specification, the particles are divided by the target particle number to be packaged and numbered separately, and numbers resulted are added and the unit particle number is then calculated, when the number of the particles reaches the target number, the particles are fed into the weighing hopper and weighed and memorized, and the goods are discharged by the weighing hopper into the packaging container; when the particle number counted the last time is less than the target particle number, the lacked particles will be added by the feeding device.

A method for using the electronic weigh packer for weighing, characterized in that the particle number calculating method is: the particles of the small sample is calculated each time, and the unit particle weight is calculated by moving average or weighted moving average.

According to the method of the current invention, the weight calculating method of the unit particle weight can vary according to the different characteristics of the different goods. The method can be as follows:

### 1) Using the small sample number to calculate the unit particle by moving average or weighted moving average.

Using 3 times as an example:
The unit particle weight of the first time is A;
The unit particle weight of the second time is B;
The unit particle weight of the third time is C. The first unit particle weight a is obtained by averaging A, B, C (or weighted average).

The unit particle weight of the fourth time is D. The second unit particle weight b is obtained by averaging B, C, D (or weighted average).

The unit particle weight of the fifth time is E. The third unit particle weight c is obtained by averaging C, D, E (or weighted average).

And so on so forth.

### 2) The particle number of the big sample each time is used to calculate the particle weight.

The unit particle weight of the first time is A, the first unit particle weight can be directly obtained a=A;
The unit particle weight of the first time is B, the second unit particle weight can be directly obtained b=B;
And so on so forth.

### 3) Using the particle number of each big sample to calculate unit particle weight by moving average or weighted moving average. The calculation method is the same as 1)

The above is just a preferred embodiment of the present invention. The overall scope of protection of the present invention is laid down in the claims.

## Claims

1. An electronic weigh packer for weighing according to the number of the goods particles, **characterized in that** the electronic weigh packer includes a storage funnel (1), a unit-particle-weight-obtaining unit and a quantifying packaging unit, **characterized in that**
- the unit-particle-weight-obtaining unit comprises a sampling device (2), a conveying device (3), a multiple line vibrator (4), a storage chute (7), a camera (5), a camera controller, a light source (6) and an input device for setting the number of particles to be counted, wherein the quantifying packaging unit comprises a dividing chute (9), a feeding device (10), weighing hoppers(8, 11) and a weighing controller (12), wherein the unit-particle-weight-obtaining unit and all the components of the quantifying packaging unit are coordinated by PLC;
- the unit particle weight obtaining unit also contains a counting & weighing hopper, wherein the function of the counting & weighing hopper is to weigh the particles lined and numbered by the multiple line vibrator, and the counting & weighing hopper can be separately set up or share with one of the weighing hoppers (8, 11);
- the sampling device (2) is situated inside the storage funnel (1), whose function is to sample the particles of goods to be wrapped and to feed the sampled particles into the conveying device (3);
- the function of the conveying device (3) is to evenly convey the particles into to the multiple line vibrator (4);
- the function of the multiple line vibrator (4) is to accelerate the particles inside its grooves and to line up all the particles inside the grooves in order to prevent overlapping of the particles, and the particles line up and then descend into the storage chute (7) with a bottom door;
- the camera (5) coordinates with the light source (6) to scan the descending particles with high velocity and transfers the images to the camera control device;
- the camera controller analyzes the images and count the particle number;
- the function of the storage chute (7) is: when the number of the particles reaches a set number, the bottom door of the storage chute will open and the particles with the certain number will be weighed in the counting & weighing hopper,
- the function of the PLC is to calculate the unit particle weight according to the particle number counted and the total weight of the collective particles, and to calculate the package weight according to the number of particles specified for each package and to amend the weight value to be assigned by the electronic weigh packer;
- the function of the weighing controller is to weigh according to the weight value determined by the PLC;
- the dividing chute (9) is situated below the storage funnel (1), and the particles are fed into the weighing hoppers (8, 11) underneath from all of its outlet openings of the dividing chute (9) through all the feeding devices (10).

2. An electronic weigh packer for weighing according to the number of the goods particles according to claim 1, **characterized in that** the sampling device (2) is located above the sampling spot of the dividing chute (9).

3. A method for using the electronic weigh packer for weighing according to the number of the goods particles according to claim 1 or 2, **characterized in that** the method comprises the following steps:
- First, setting packing specification of electronic weigh packer through the input device, and setting the number of particles counted each time by the unit-particle-weight-obtaining unit; said package specification is the target number of particles for packaging;
- After setting completed, starting unit-particle-weight-obtaining-unit to initiate counting of the number of the particles;
- stopping counting particle number when the number counted by the unit-particle-weight-obtaining unit has reached the number of particles set above; obtaining the goods weight using the counting & weighing hopper; calculating the unit particle weight using PLC and calculating the package weight according to the stipulated package specification and input into weighing controller of electronic weigh packer;
- Electronic weigh packer starts weighing ;
- amending the package weight using the unit particle weight continuously given by the unit-particle-weight-obtaining-unit during the operation of the electronic weigh packer.

4. A method according to claim 3, **characterized in that** the package weight is adjusted every tens of seconds as long as particle number counted each time can fully represent the goods particles being packaged.

5. A method according to claim 3, **characterized in that** when setting the package specification and the number of particles counted each time by the unit-particle-weight-obtaining-unit, the operating methods under different conditions are as follows:
- when the particle number counted by the unit-particle-weight-obtaining-unit each time is set to equal the packaging specification, the particles counted each time, upon being weighed by the counting & weighing hopper to obtain the unit particle weight, are discharged into the packaging container;
- when the particle number counted by the unit-particle-weight-obtaining unit each time is set to be smaller than the packaging specification, the particles counted each time, upon being weighed by the counting & weighing hopper to obtain the unit particle weight, are complemented with the lacking number of particles through the feeding device (10) and are then discharged into the packaging container;
- when the particle number counted by the unit-particle-weight-obtaining unit each time is set to be larger than the packaging specification, the unit-particle-weight-obtaining unit counts the number of particles in several times, each time counting the target number of particles for packaging, then adding the several counting results and calculating the unit particle weight; each time when the number of the particles reaches the target number, the particles are fed into the weighing hopper where they are weighed and memorized, and then discharged into the packaging container; when the particle number counted the last time is less than the target particle number, the lacked number of particles will be added by the feeding devices (10).

6. A method according to claim 3, **characterized in that** the unit particle weight is calculated by using the following method: the particles of the small sample is calculated each time, and the unit particle weight is calculated by using moving average or moving weighted

7. A method according to claim 3, **characterized in that** the unit particle weight calculating method is: using the counting result of a single big sample to calculate the unit particle weight.

8. A method according to claim 3, **characterized in that** the unit particle weight is calculated by using the following method: the particles of the big sample are counted each time, and the unit particle weight is calculated by using moving average or moving weighted average.

## Patentansprüche

1. Elektronisch wiegende Packvorrichtung zum Wiegen gemäß der Anzahl an Warenpartikeln, **dadurch gekennzeichnet, dass** die elektronisch wiegende Packvorrichtung einen Lagertrichter (1), eine das Partikeleinheitsgewicht erlangende Einheit und eine quantifizierende Verpackungseinheit aufweist, **dadurch gekennzeichnet, dass**
- die das Partikeleinheitsgewicht erlangende Einheit eine Probenahmevorrichtung (2), eine Beförderungsvorrichtung (3), einen Mehrlinienrüttler (4), eine Lagerschütte (7), eine Kamera (5), eine Kamerasteuerung, eine Lichtquelle (6) und eine Eingabevorrichtung zum Festlegen der Anzahl an zu zählenden Partikel umfasst,
wobei die quantifizierende Verpackungseinheit eine Trennungsschütte (9), eine Zufuhreinrichtung (10), Wiegetrichter (8, 11) und eine Wiegesteuerung (12) umfasst;
wobei die das Partikeleinheitsgewicht erlangende Einheit und alle Komponenten der quantifizierenden Verpackungseinheit durch eine speicherprogrammierbare Steuerung SPS koordiniert werden;
- die das Partikeleinheitsgewicht erlangende Einheit zudem einen Zähl- & Wiegetrichter enthält, wobei die Funktion des Zähl- & Wiegetrichters darin besteht, die Partikel, die durch den Mehrlinienrüttler in Linien aufgeteilt und nummeriert werden, zu wiegen, und der Zähl- & Wiegetrichter entweder separat erstellt sein kann oder mit einem der Wiegetrichter (8, 11) geteilt werden kann;
- die Probenahmevorrichtung (2) sich innerhalb des Lagertrichters (1) befindet, und deren Funktion darin besteht, eine Probe der Partikel an Waren, die umhüllt werden sollen, zu nehmen und die Partikel, von denen eine Probe genommen wurde, der Beförderungsvorrichtung (3) zuzuführen;
- die Funktion der Beförderungsvorrichtung (3) darin besteht, die Partikel gleichmäßig dem Mehrlinienrüttler (4) zuzuführen;
- die Funktion des Mehrlinienrüttlers (4) darin besteht, die Partikel innerhalb seiner Rinnen zu beschleunigen und alle Partikel innerhalb der Rinnen hintereinander anzuordnen, um ein Überlagern der Partikel zu vermeiden, und die Partikel werden hintereinander angeordnet und fallen dann in die Lagerschütte (7) mit einer Bodenklappe;
- die Kamera (5) mit der Lichtquelle (6) koordiniert wird, um die herabfallenden Partikel mit hoher Geschwindigkeit abzutasten und die Bilder an die Kamerasteuerung zu übertragen;
- die Kamerasteuerung die Bilder analysiert und die Partikelanzahl zählt;
- die Funktion der Lagerschütte (7) darin besteht, dass wenn die Anzahl der Partikel eine festgelegte Anzahl erreicht, sich die Bodenklappe der Lagerschütte öffnet und die Partikel mit der bestimmten Anzahl im Zähl- & Wiegetrichter gewogen werden,
- die Funktion der SPS darin besteht, das Partikeleinheitsgewicht gemäß der gezählten Partikelanzahl und das Gesamtgewicht der gesammelten Partikel zu berechnen und das Verpackungsgewicht gemäß der Anzahl an Partikeln, die für jede Verpackungseinheit vorgegeben sind, zu berechnen und den Gewichtswert, der durch die elektronisch wiegende Packvorrichtung zugeordnet werden soll, anzupassen;
- die Funktion der Wiegesteuerung darin besteht, gemäß dem von der SPS vorgegebenen Gewichtswert zu wiegen;
- die Trennungsschütte (9) sich unterhalb des Lagertrichters (1) befindet und die Partikel aus allen Auslassöffnungen der Trennungsschütte (9) durch alle Zufuhreinrichtungen (10) den unterhalb gelegenen Wiegetrichtern (8, 11) zugeführt werden.

2. Elektronisch wiegende Packvorrichtung zum Wiegen gemäß der Anzahl der Warenpartikel nach Anspruch 1, **dadurch gekennzeichnet, dass** sich die Probenahmevorrichtung (2) über dem Probenahmepunkt der Trennungsschütte (9) befindet.

3. Verfahren zum Verwenden der elektronisch wiegenden Packvorrichtung zum Wiegen gemäß der Anzahl der Warenpartikel nach Anspruch 1 oder 2, **dadurch gekennzeichnet, dass** das Verfahren die folgenden Schritte umfasst:
- Zuerst Festlegen der Packspezifizierung der elektronisch wiegenden Packvorrichtung über die Eingabevorrichtung und Festlegen der Anzahl an Partikeln, die jedes Mal von der das Partikeleinheitsgewicht erlangenden Einheit gezählt werden; wobei die Verpackungsspezifizierung die Zielvorgabeanzahl an Partikeln zum Verpacken ist;
- Nach dem Abschließen des Festlegens Starten der das Partikeleinheitsgewicht erlangenden Einheit zum Auslösen des Zählens der Anzahl der Partikel;
- Beenden des Zählens der Partikelanzahl, wenn die Anzahl, die von der das Partikeleinheitsgewicht erlangenden Einheit gezählt wurde, die vorstehend festgelegte Anzahl an Partikeln erreicht hat; Erlangen des Warengewichts unter Verwendung des Zähl- & Wiegetrichters; Berechnen des Partikeleinheitsgewichts unter Verwendung der SPS und Berechnen des Verpackungsgewichts gemäß der vorgeschriebenen Verpackungsspezifizierung und Eingeben in die Wiegesteuerung der elektronisch wiegenden Packvorrichtung;
- Beginn des Wiegens durch die elektronisch wiegende Packvorrichtung;
- Anpassen des Verpackungsgewichts unter Verwendung des Partikeleinheitsgewichts, das von der das Partikeleinheitsgewicht erlangenden Einheit während des Betriebs der elektronisch wiegenden Packvorrichtung dauerhaft übermittelt wird.

4. Verfahren nach Anspruch 3, **dadurch gekennzeichnet, dass** das Verpackungsgewicht alle zehn Sekunden berichtigt wird, solange die jedes Mal gezählte Partikelanzahl die Warenpartikel, die verpackt werden, vollständig wiedergeben kann.

5. Verfahren nach Anspruch 3, **dadurch gekennzeichnet, dass** beim Festlegen der Verpackungsspezifizierung und der Anzahl an Partikeln, die jedes Mal von der das Partikeleinheitsgewicht erlangenden Einheit gezählt werden, die Arbeitsweisen unter verschiedenen Bedingungen sind wie folgt:
- wenn für die Partikelanzahl, die von der das Partikeleinheitsgewicht erlangenden Einheit jedes Mal gezählt wird, festgelegt ist, dass sie der Verpackungsspezifizierung gleich ist, werden die jedes Mal gezählten Partikel, wenn sie vom Zähl- & Wiegetrichter gewogen werden, um das Partikeleinheitsgewicht zu erlangen, in den Verpackungsbehälter ausgeleitet;
- wenn für die Partikelanzahl, die von der das Partikeleinheitsgewicht erlangenden Einheit jedes Mal gezählt wird, festgelegt ist, dass sie kleiner als die Verpackungsspezifizierung ist, werden die jedes Mal gezählten Partikel, wenn sie vom Zähl- & Wiegetrichter gewogen werden, um das Partikeleinheitsgewicht zu erlangen, durch die Zufuhrvorrichtung (10) um die fehlende Anzahl an Partikeln ergänzt und dann in den Verpackungsbehälter ausgeleitet;
- wenn für die Partikelanzahl, die von der das Partikeleinheitsgewicht erlangenden Einheit jedes Mal gezählt wird, festgelegt ist, dass sie größer als die Verpackungsspezifizierung ist, zählt die das Partikeleinheitsgewicht erlangende Einheit die Anzahl an Partikeln mehrmals, wobei sie jedes Mal die Zielvorgabeanzahl an Partikeln zum Verpacken zählt und dann die verschiedenen Zählergebnisse addiert und das Partikeleinheitsgewicht berechnet; jedes Mal, wenn die Anzahl der Partikel die Zielvorgabeanzahl erreicht, werden die Partikel dem Wiegetrichter zugeführt, in dem sie gewogen und gespeichert werden, und dann in den Verpackungsbehälter ausgeleitet; wenn die beim letzten Mal gezählte Partikelanzahl kleiner als die Zielpartikelanzahl ist, wird die fehlende Anzahl an Partikeln durch die Zufuhreinrichtung (10) hinzugefügt.

6. Verfahren nach Anspruch 3, **dadurch gekennzeichnet, dass** das Partikeleinheitsgewicht unter Verwendung des folgenden Verfahrens berechnet wird: die Partikel der kleinen Probe werden jedes Mal berechnet, und das Partikeleinheitsgewicht wird unter Verwendung des fortlaufenden Durchschnitts oder des gewichteten fortlaufenden Durchschnitts berechnet.

7. Verfahren nach Anspruch 3, **dadurch gekennzeichnet, dass** das Berechnungsverfahren für das Partikeleinheitsgewicht ist: Verwenden des Zählergebnisses einer einzelnen großen Probe zum Berechnen des Partikeleinheitsgewichts.

8. Verfahren nach Anspruch 3, **dadurch gekennzeichnet, dass** das Partikeleinheitsgewicht unter Verwendung des folgenden Verfahrens berechnet wird: die Partikel der großen Probe werden jedes Mal gezählt, und das Partikeleinheitsgewicht wird unter Verwendung des fortlaufenden Durchschnitts oder des gewichteten fortlaufenden Durchschnitts berechnet.

## Revendications

1. Conditionneur à pesage électronique pour peser en fonction du nombre de particules de produits, **caractérisé en ce que** le conditionneur à pesage électronique comprend un entonnoir de stockage (1), une unité d'obtention de poids par particule unitaire et une unité de conditionnement par quantification, **caractérisé en ce que**
- l'unité d'obtention de poids par particule unitaire comprend un dispositif d'échantillonnage (2), un dispositif de transport (3), un vibrateur à lignes multiples (4), une goulotte de stockage (7), une caméra (5), un contrôleur de caméra, une source lumineuse (6) et un dispositif d'entrée pour régler le nombre de particules à compter,
dans lequel l'unité de conditionnement par quantification comprend une goulotte de séparation (9), un dispositif d'alimentation (10), des trémies de pesage (8, 11) et un contrôleur de pesage (12),
dans lequel l'unité d'obtention de poids par particule unitaire et tous les composants de l'unité de conditionnement par quantification sont coordonnés par un PLC ;
- l'unité d'obtention de poids par particule unitaire comprend en outre une trémie de comptage et de pesage, dans lequel la fonction de la trémie de comptage et de pesage est de peser les particules alignées et comptées par le vibrateur à lignes multiples, et la trémie de comptage et de pesage peut être réglée séparément ou partager avec l'une des trémies de pesage (8, 11) ;
- le dispositif d'échantillonnage (2) est situé à l'intérieur de la goulotte de stockage (1), dont la fonction est d'échantillonner les particules de produits à emballer et d'amener les particules échantillonnées dans le dispositif de transport (3) ;
- la fonction du dispositif de transport (3) est de transporter régulièrement les particules dans le vibrateur à lignes multiples (4) ;
- la fonction du vibrateur à lignes multiples (4) est d'accélérer les particules à l'intérieur de ses rainures et d'aligner toutes les particules à l'intérieur des rainures afin d'éviter un chevauchement des particules, et les particules s'alignent et descendent ensuite dans la goulotte de stockage (7) avec une porte du bas ;
- la caméra (5) est coordonnée avec la source lumineuse (6) pour balayer les particules qui descendent à grande vitesse et transfère les images au dispositif de contrôle de caméra ;
- le contrôleur de caméra analyse les images et compte le nombre de particules ;
- la fonction de la goulotte de stockage (7) consiste à : lorsque le nombre des particules atteint un nombre réglé, la porte du bas de la goulotte de stockage s'ouvre et les particules de ce certain nombre seront pesées dans la trémie de comptage et de pesage,
- la fonction du PLC est de calculer le poids par particule unitaire en fonction du nombre de particules comptées et du poids total des particules collectives, et de calculer le poids de l'emballage en fonction du nombre de particules spécifié pour chaque emballage et de corriger la valeur du poids à affecter par le conditionneur à pesage électronique ;
- la fonction du contrôleur de pesage est de peser en fonction de la valeur du poids déterminée par le PLC ;
- la goulotte de séparation (9) est située sous l'entonnoir de stockage (1), et les particules sont amenées dans les trémies de pesage (8, 11) sous toutes les ouvertures de sortie de la goulotte de séparation (9) via tous les dispositifs d'alimentation (10).

2. Conditionneur à pesage électronique pour peser en fonction du nombre de particules de produits selon la revendication 1, **caractérisé en ce que** le dispositif d'échantillonnage (2) est situé au-dessus du lieu d'échantillonnage de la goulotte de séparation (9).

3. Procédé pour utiliser le conditionneur à pesage électronique pour peser selon le nombre de particules de produits selon la revendication 1 ou 2, **caractérisé en ce que** le procédé comprend les étapes suivantes :
- tout d'abord, le réglage d'une spécification d'emballage du conditionneur à pesage électronique via le dispositif d'entrée, et le réglage du nombre de particules comptées chaque fois par l'unité d'obtention de poids par particule unitaire ; ladite spécification d'emballage est le nombre cible de particules pour le conditionnement ;
- une fois le réglage achevé, le lancement de l'unité d'obtention de poids par particule unitaire pour initier le comptage du nombre de particules ;
- l'arrêt du comptage du nombre de particules lorsque le nombre compté par l'unité d'obtention de poids par particule unitaire a atteint le nombre de particules réglé plus haut ; l'obtention du poids des produits en utilisant la trémie de comptage et de pesage ; le calcul du poids par particule unitaire en utilisant un PLC et le calcul du poids de l'emballage en fonction de la spécification d'emballage stipulée et entrée dans le contrôleur de pesage du conditionneur à pesage électronique ;
- le commencement du pesage par le conditionneur à pesage électronique ;
- la correction du poids de l'emballage en utilisant le poids par particule unitaire donné en continu par l'unité d'obtention de poids par particule unitaire pendant le fonctionnement du conditionneur à pesage électronique.

4. Procédé selon la revendication 3, **caractérisé en ce que** le poids de l'emballage est ajusté toutes les dix secondes tant qu'un nombre de particules compté chaque fois peut entièrement représenter les particules de produits qui sont conditionnées.

5. Procédé selon la revendication 3, **caractérisé en ce que**, lors du réglage de la spécification d'emballage et du nombre de particules comptées chaque fois par l'unité d'obtention de poids par particule unitaire, les procédés de fonctionnement dans des conditions différentes sont les suivants :
- lorsque le nombre de particules comptées par l'unité d'obtention de poids par particule unitaire est chaque fois réglé pour être égal à la spécification d'emballage, les particules comptées chaque fois, à leur pesée par la trémie de comptage et de pesage pour obtenir le poids par particule unitaire, sont déchargées dans le contenant d'emballage ;
- lorsque le nombre de particules comptées par l'unité d'obtention de poids par particule unitaire est chaque fois réglé pour être inférieur à la spécification d'emballage, les particules comptées chaque fois, à leur pesée par la trémie de comptage et de pesage pour obtenir le poids par particule unitaire, sont complétées par le nombre manquant de particules via le dispositif d'alimentation (10) et sont ensuite déchargées dans le contenant d'emballage ;
- lorsque le nombre de particules comptées par l'unité d'obtention de poids par particule unitaire est chaque fois réglé pour être supérieur à la spécification d'emballage, l'unité d'obtention de poids par particule unitaire compte le nombre de particules plusieurs fois, en comptant chaque fois le nombre cible de particules pour l'emballage, en additionnant ensuite les différents résultats de comptage et calculant le poids par particule unitaire ; chaque fois que le nombre de particules atteint le nombre cible, les particules sont amenées dans la trémie de pesage où elles sont pesées et mémorisées, et sont ensuite déchargées dans le contenant d'emballage ; lorsque le nombre de particules comptées la dernière fois est inférieur au nombre de particules cible, le nombre manquant de particules sera ajouté par les dispositifs d'alimentation (10).

6. Procédé selon la revendication 3, **caractérisé en ce que** le poids par particule unitaire est calculé en utilisant le procédé suivant : les particules du petit échantillon sont calculées chaque fois, et le poids par particule unitaire est calculé en utilisant une moyenne mobile ou une moyenne pondérée mobile.

7. Procédé selon la revendication 3, **caractérisé en ce que** le procédé de calcul du poids par particule unitaire consiste à : utiliser le résultat de comptage d'un seul gros échantillon pour calculer le poids par particule unitaire.

8. Procédé selon la revendication 3, **caractérisé en ce que** le poids par particule unitaire est calculé en utilisant le procédé suivant : les particules du gros échantillon sont comptées chaque fois, et le poids par particule unitaire est calculé en utilisant une moyenne mobile ou une moyenne pondérée mobile.
